# EUROPEAN PATENT APPLICATION

(11) **EP 4 531 191 A1**
(43) Date of publication of application: **02.04.2025**
(21) Application number: 24190846.6
(22) Date of filing: 25.07.2024
(51) Int. Cl.: H01M 50/474, H01M 50/477, H01M 50/486, H01M 10/0585, H01M 50/105, H01M 50/553

(54) **RECHARGEABLE BATTERY**

(30) Priority: 27.09.2023 KR 20230130988
(71) Applicant: SAMSUNG SDI CO., LTD., Giheung-gu Yongin-si, Gyeonggi-do 17084 (KR)
(72) Inventor: KIM, Chiyoung, 17084 Yongin-si (KR); JUNG, Chan Yoon, 17084 Yongin-si (KR); LEE, Jehyun, 17084 Yongin-si (KR)
(74) Representative: Marks & Clerk LLP

(57) **Abstract**

A rechargeable battery includes an electrode assembly and a casing configured to accommodate and seal the electrode assembly, wherein the electrode assembly includes a cell stack including a plurality of first electrodes and a plurality of second electrodes alternately stacked one by one with a separator interposed therebetween, the cell stack including a first part having a first thickness, and a second part having a second thickness smaller than the first thickness, a correction sheet positioned on the second part and configured to uniformize a thickness of the cell stack, and a pair of first fixing parts positioned over front, lateral, and rear surfaces of the cell stack and having a portion that overlaps the correction sheet.

## Description

### BACKGROUND

### 1. Field

Embodiments relate to a rechargeable battery, and more particularly, to a structure of a stacked electrode assembly.

### 2. Description of the Related Art

Rechargeable batteries, which are capable of being charged, are used for various purposes such as power sources for small-scale electronic devices, such as mobile phones and notebook computers, and power sources for driving motors of transportation means such as electric vehicles and hybrid vehicles. The rechargeable battery basically includes an electrode assembly and a casing for accommodating and sealing the electrode assembly. The rechargeable batteries may be classified into a cylindrical battery, an angular battery, a pouch-type battery, and the like depending on external shapes of the rechargeable batteries.

The electrode assembly may be configured by alternately stacking a plurality of positive electrodes and a plurality of negative electrodes one by one with separators interposed therebetween. The positive electrode and the negative electrode may each include a substrate and composite material layers positioned on two opposite surfaces of the substrate. A non-uniform thickness may occur during a process of manufacturing the composite material layer. The non-uniform thickness of the composite material layer causes a non-uniform thickness of the electrode assembly. In addition, in a region of the electrode assembly in which a thickness of the composite material layer is insufficient, joining forces between the positive electrode, the separator, and the negative electrode are decreased, which may degrade output characteristics and output stability of the rechargeable battery.

### SUMMARY

Embodiments include a rechargeable battery. The rechargeable battery includes an electrode assembly and a casing configured to accommodate and seal the electrode assembly, wherein the electrode assembly includes a cell stack including a plurality of first electrodes and a plurality of second electrodes alternately stacked one by one with a separator interposed therebetween, the cell stack including a first part having a first thickness, and a second part having a second thickness smaller than the first thickness. A correction sheet is positioned on the second part and uniformizes a thickness of the cell stack. A pair of first fixing parts is positioned over a front surface, a lateral surface and a rear surface of the cell stack, the pair of first fixing parts having a portion that overlaps the correction sheet.

The correction sheet may include a pair of correction sheets respectively positioned on a front surface and a rear surface of the second part.

Each of the pair of correction sheets may be configured as a polymer film having an adhesive layer.

The cell stack may have a uniform thickness by being pressed by a thermal press device after the correction sheet is attached to the second part.

The cell stack may include a first edge and second and third edges intersecting the first edge, a plurality of first tabs extending from the plurality of first electrodes and a plurality of second tabs extending from the plurality of second electrodes at the first edge, and the second part and the correction sheet may be positioned to adjoin the first edge.

The second part and the correction sheet may each have a width equal to a width of the cell stack.

The pair of first fixing parts may be positioned over the front surface, the lateral surface and the rear surface of the cell stack at the second and third edges and may overlap the correction sheet on at least one of the front surface and the rear surface of the cell stack.

The cell stack may include a fourth edge parallel to the first edge and intersecting the second and third edges, and the electrode assembly may further include a second fixing part positioned over the front surface, the lateral surface and the rear surface of the cell stack at the fourth edge.

The electrode assembly may further include a third fixing part positioned between the plurality of first tabs and the plurality of second tabs at the first edge, and the third fixing part may be positioned over the front surface, the lateral surface and the rear surface of the cell stack, the third fixing part including a portion that overlaps the correction sheet.

The electrode assembly may further include a fourth fixing part configured to surround the plurality of first tabs and the plurality of second tabs.

Embodiments include a rechargeable battery. The rechargeable battery includes an electrode assembly and a casing configured to accommodate and seal the electrode assembly. The electrode assembly includes a cell stack including a separator folded multiple times in a zigzag pattern, and a plurality of first electrodes and a plurality of second electrodes alternately stacked one by one with the separator interposed therebetween, the cell stack being divided into a first part and a second part having a smaller thickness than the first part. A pair of correction sheets provided on the second part and positioned on a front surface and a rear surface of the cell stack to uniformize a thickness of the cell stack and a plurality of fixing parts is attached to an edge of the cell stack over the front surface, a lateral surface and the rear surface of the cell stack, the plurality of fixing parts having a portion overlapping the pair of correction sheets while covering the pair of correction sheets from above.

The cell stack may include a first edge, and second and third edges intersecting the first edge, a plurality of first tabs may extend from the plurality of first electrodes and a plurality of second tabs may extend from the plurality of second electrodes at the first edge, and the second part and the pair of correction sheets may be positioned to adjoin the first edge.

The plurality of fixing parts may include a pair of first fixing parts, and the pair of first fixing parts may be attached to the pair of correction sheets and the cell stack at the second and third edges.

The plurality of fixing parts may further include a third fixing part, and the third fixing part may be provided between the plurality of first tabs and the plurality of second tabs at the first edge and attached to the pair of correction sheets and the cell stack.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is an exploded perspective view of a rechargeable battery according to one or more embodiments;
FIG. 2 is a cross-sectional view of an electrode assembly taken along line A-A in FIG. 1 according to one or more embodiments;
FIG. 3 is a top plan view illustrating a state in which the electrode assembly illustrated in FIG. 2 is unfolded according to one or more embodiments;
FIG. 4 is a partially enlarged cross-sectional view of first and second electrodes illustrated in FIG. 3 according to one or more embodiments;
FIG. 5 is a cross-sectional view of the electrode assembly taken along line B-B in FIG. 1 according to one or more embodiments;
FIG. 6 is a schematic view illustrating a thermal press device and a cell stack illustrated in FIG. 5 according to one or more embodiments;
FIG. 7 is a schematic view illustrating a thermal press device and a cell stack according to a comparative example (comparison with FIG. 6);
FIG. 8 is a perspective view of an electrode assembly of a rechargeable battery according to one or more embodiments;
FIG. 9 is a cross-sectional view of the electrode assembly taken along line C-C in FIG. 8 according to one or more embodiments;
FIG. 10 is a cross-sectional view of the electrode assembly taken along line D-D in FIG. 8 according to one or more embodiments; and
FIG. 11 is a schematic view illustrating electrode assemblies according to Examples 1 and 2 and the comparative example.

### DETAILED DESCRIPTION

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described in detail with reference to the accompanying drawings so that those with ordinary skill in the art to which the present disclosure pertains may easily carry out the embodiments. The present disclosure may be implemented in various different ways, and is not limited to the embodiments described herein.

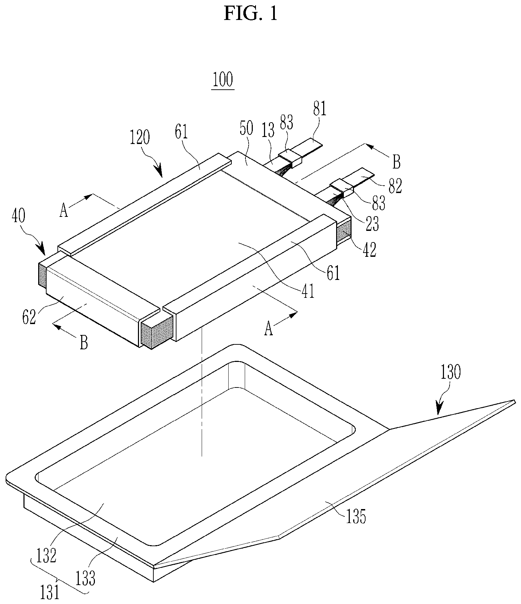

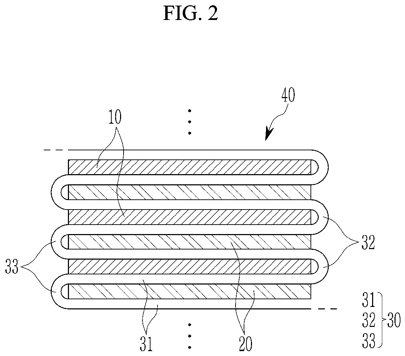

FIG. 1 is an exploded perspective view of a rechargeable battery according to one or more embodiments, and FIG. 2 is a cross-sectional view of an electrode assembly taken along line A-A in FIG. 1 according to one or more embodiments.

With reference to FIGS. 1 and 2, a rechargeable battery 100 according to one or more embodiments includes an electrode assembly 120 and a casing 130 configured to accommodate and seal the electrode assembly 120 and an electrolyte. FIG. 1 illustrates a pouch-type casing 130. However, the type of casing is not limited to the illustrated example and may vary.

The casing 130 may include a lower casing 131 including an accommodation portion 132 and a sealing portion 133, and a flat upper casing 135. The lower casing 131 and the upper casing 135 may be integrally connected to each other. The accommodation portion 132 may be a concave space provided to accommodate the electrode assembly 120. The sealing portion 133 may be positioned to surround the accommodation portion 132.

After the electrode assembly 120 is accommodated in the accommodation portion 132, the upper casing 135 may be folded and may overlap the lower casing 131 and the electrode assembly 120. Further, an edge of the sealing portion 133 and an edge of the upper casing 135 may be integrally joined by thermal bonding, such that the electrode assembly 120 may be sealed.

The casing 130 may include a metal sheet and a plurality of polymer sheets configured to cover inner and outer surfaces of the metal sheet. The metal sheet may be an aluminium sheet and may provide mechanical strength to the casing 130. The polymer sheet may be any one of a polyethylene terephthalate (PET) sheet, a nylon sheet, and a PET-nylon composite sheet and serve to insulate and protect the casing 130.

The electrode assembly 120 includes a cell stack 40. The cell stack 40 includes a plurality of first electrodes 10 and a plurality of second electrodes 20 alternately stacked one by one with a separator 30 interposed therebetween. The cell stack 40 may include a plurality of separators or a single separator. FIG. 2 illustrates the single separator 30 as an example. The separator 30 may have a long band shape and be folded multiple times in a zigzag pattern.

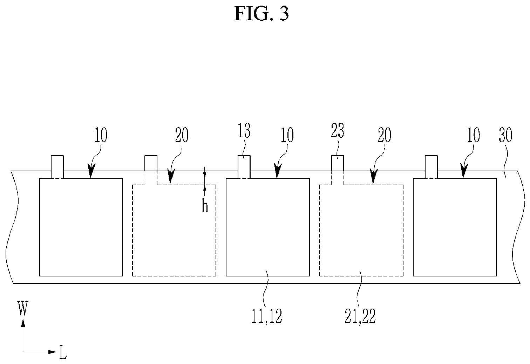

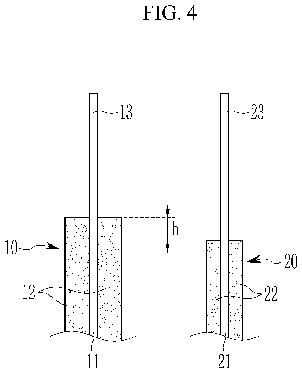

FIG. 3 is a top plan view illustrating a state in which the electrode assembly illustrated in FIG. 2 is unfolded according to one or more embodiments, and FIG. 4 is a partially enlarged cross-sectional view of first and second electrodes illustrated in FIG. 3 according to one or more embodiments.

With reference to FIGS. 2 to 4, the separator 30 may include a plurality of flat portions 31 and a plurality of bent portions 32 and 33. The flat portions 31 and the bent portions 32 and 33 may be alternately positioned one by one in a longitudinal direction of the separator 30 (direction L in FIG. 3). The bent portions 32 and 33 may include the first bent portion 32 positioned at one side (right) of the flat portion 31, and the second bent portion 33 positioned at the other side (left) of the flat portion 31. The first bent portions 32 and the second bent portions 33 may be alternately positioned one by one in the longitudinal direction (direction L) of the separator 30.

The first electrode 10 and the second electrode 20 may be positioned between the two adjacent flat portions 31 among the plurality of flat portions 31. In the unfolded state of the separator 30, the first electrode 10 and the second electrode 20 may be positioned to adjoin different surfaces of the separator 30. For example, when the first electrode 10 is positioned to adjoin one surface (e.g., front surface) of the separator 30, the second electrode 20 may be positioned to adjoin the opposite surface (e.g., rear surface) of the separator 30.

The first electrode 10 may include a first substrate 11, first composite material layers 12 positioned on two opposite surfaces of the first substrate 11, and a first tab 13 extending toward one side (e.g., upward) from the first substrate 11. The first composite material layer 12 may not be positioned on the first tab 13. The second electrode 20 may include a second substrate 21, second composite material layers 22 positioned on two opposite surfaces of the second substrate 21, and a second tab 23 extending toward one side (e.g., upward) from the second substrate 21. The second composite material layer 22 is not positioned on the second tab 23.

The first substrate 11 may be configured as a copper or nickel foil. The first composite material layer 12 may include graphite, a conductive material, a binder, and the like. The second substrate 21 may be configured as an aluminium foil. The second composite material layer 22 may include a transition metal oxide such as LiCoO₂, LiNiO₂, or LiMn₂O₄, a conductive material, a binder, and the like. The first electrode 10 may be referred to as a negative electrode, and the second electrode 20 may be referred to as a positive electrode.

The separator 30 may include a polymer material such as polyethylene (PE) or polypropylene (PP) and may insulate the first electrode 10 and the second electrode 20 while allowing a movement of lithium ions.

At the time of charging the rechargeable battery 100, lithium ions are introduced into the first composite material layer 12, and the first composite material layer 12 expands. At the time of discharging the rechargeable battery 100, lithium ions are discharged from the first composite material layer 12, and the first composite material layer 12 contracts. As the service life of the rechargeable battery 100 increases, the first composite material layer 12 may be degraded by a repeated change in volume. Therefore, in consideration of the degradation, the first electrode 10 may be configured to be larger than the second electrode 20.

For example, based on a width direction (direction W in FIG. 3) of the separator 30 in FIGS. 3 and 4, the first substrate 11 may have a larger height than the second substrate 21, and the first substrate 11 and the second substrate 21 may have a height difference of h. Therefore, the first electrode 10 may include a portion that does not overlap the adjacent second electrode 20.

The plurality of first electrodes 10 may be manufactured by a process of forming the first composite material layers 12 on the two opposite surfaces of the first substrate having a long band shape by stripe coating, and then cutting the first substrate into unit substrates. In addition, the plurality of second electrodes 20 may be manufactured by a process of forming the second composite material layers 22 on the two opposite surfaces of the second substrate having a long band shape by stripe coating, and then cutting the second substrate into unit substrates.

A non-uniform thickness may occur when the first composite material layers 12 and the second composite material layers 22 are formed by stripe coating. For example, in an upper region of the first substrate 11 that adjoins the first tab 13, a thickness of the first composite material layer 12 may be smaller than a thickness of the first composite material layer 12 in another region. In an upper region of the second substrate 21 that adjoins the second tab 23, a thickness of the second composite material layer 22 may be smaller than a thickness of the second composite material layer 22 in another region.

The first composite material layer 12 may have a larger thickness than the second composite material layer 22. A thickness difference between the regions of the first composite material layer 12 may be larger than a thickness difference between the regions of the second composite material layer 22. If the cell stack 40 is manufactured by stacking ten to twenty first electrodes 10 and ten to twenty second electrodes 20, the thickness differences of the composite material layers 12 and 22 are accumulated, which may cause a greater thickness difference.

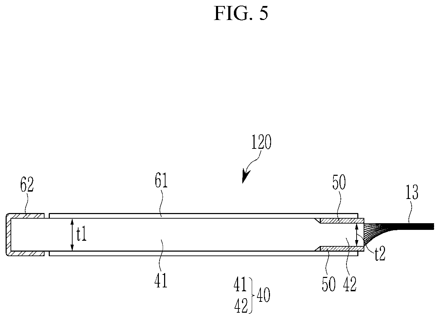

FIG. 5 is a cross-sectional view of the electrode assembly taken along line B-B in FIG. 1 according to one or more embodiments.

With reference to FIGS. 1 and 5, the cell stack 40 includes a first part 41 having a first thickness t1, and a second part 42 having a second thickness t2 smaller than the first thickness t1. The second part 42 may correspond to an upper portion of the first substrate 11, which adjoins the first tab 13, and an upper portion of the second substrate 21, which adjoins the second tab 23, and occupies a smaller area in the cell stack 40 than the first part 41.

The electrode assembly 120 includes correction sheets 50 positioned on the second part 42 of the cell stack 40 and configured to uniformize the thickness of the cell stack 40, and a pair of first fixing parts 61 attached to left and right edges of the cell stack 40. In this case, the pair of first fixing parts 61 each include a portion that overlaps the correction sheet 50. For convenience, the first fixing part 61 is omitted from FIG. 2.

The electrode assembly 120 may further include a second fixing part 62 attached to a lower edge of the cell stack 40. The pair of first fixing parts 61 and the second fixing part 62 serve to maintain a constant shape and thickness of the cell stack 40.

A size of the correction sheet 50 may be equal to a size of the second part 42. The correction sheet 50 may adjoin an upper edge of the cell stack 40, and a width of the correction sheet 50 may be equal to a width of the cell stack 40. The upper edge of the cell stack 40 may be referred to as a first edge, and the left and right edges may be referred to as second and third edges, and the lower edge may be referred to as a fourth edge.

The correction sheet 50 may be attached to any one of the front and rear surfaces of the second part 42 or attached to both the front and rear surfaces. In both the cases, a sum of a thickness (second thickness t2) of the second part 42 and a thickness of the correction sheet 50 may be equal to a thickness (first thickness t1) of the first part 41. That is, the number of correction sheets 50 and the thickness of the correction sheet 50 may be appropriately selected in consideration of the thickness difference between the first part 41 and the second part 42.

The correction sheet 50 may be configured as a polymer film having an adhesive layer, e.g., a film made of polyimide (PI) or polyethylene terephthalate (PET). The pair of first fixing parts 61 and the second fixing part 62 may each be configured as a polymer film having an adhesive layer. The correction sheet 50, the pair of first fixing parts 61, and the second fixing part 62 may be configured as polymer films made of the same material.

After the plurality of first electrodes 10 and the plurality of second electrodes 20 are alternately disposed one by one between the separator 30 folded in a zigzag pattern, the cell stack 40 may be pressed by a thermal press device. The cell stack 40 may be loaded into the thermal press device after the correction sheet 50 is attached to the second part 42.

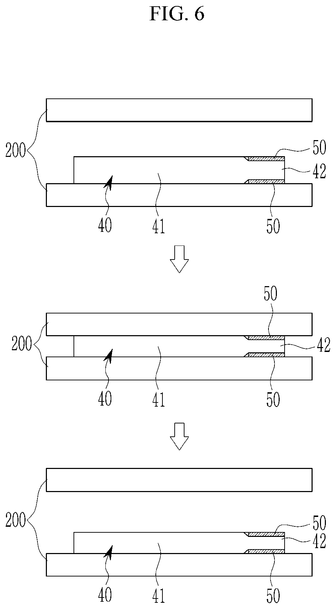

FIG. 6 is a schematic view illustrating the thermal press device and the cell stack illustrated in FIG. 5 according to one or more embodiments.

With reference to FIGS. 2 and 6, the cell stack 40, in which the correction sheet 50 is attached to the second part 42, may be loaded into a thermal press device 200, and the cell stack 40 may be compressed in a thickness direction by an operation of the thermal press device 200. The thermal press device 200 strongly joins the first electrode 10, the separator 30, and the second electrode 20 by pressing the cell stack 40. If the strongly joined state between the first electrode 10, the separator 30, and the second electrode 20 is maintained, the ionic conductivity may be improved during the charging/discharging process, which may ensure output characteristics of the rechargeable battery.

The correction sheet 50 attached to the second part 42 transmits the pressure of the thermal press device 200 to the second part 42 so that the second part 42 is pressed by the same pressure as the first part 41. Therefore, both the first part 41 and the second part 42 of the cell stack 40 may receive uniform pressure, such that the joining forces between the first electrode 10, the separator 30, and the second electrode 20 may be increased, and the overall thickness may be uniformized.

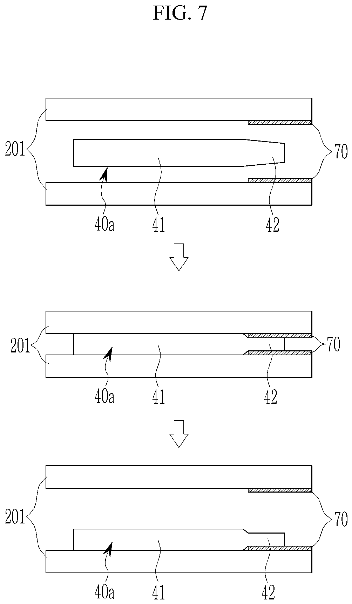

FIG. 7 is a schematic view illustrating a thermal press device and a cell stack according to a comparative example (comparison with FIG. 6).

With reference to FIG. 7, the cell stack 40a of the comparative example may include the first part 41 and the second part 42, which are identical to those of FIG. 6, but does not include the correction sheet. A protruding portion 70, which corresponds to the second part 42, may be positioned on a thermal press device 201 of the comparative example.

The second part 42 of the cell stack 40a may be pressed by the protruding portion 70. However, in the case of the pressing method of the comparative example, the cell stack 40a may move during a process of disposing the cell stack 40a on the thermal press device 201 and a process of pressing the cell stack 40a by the thermal press device 201, which may cause a position dispersion. In this case, the uniform pressing on the cell stack 40a may deteriorate.

With reference back to FIG. 6, because the correction sheet 50 is attached in advance to the second part 42, the uniform pressing on the cell stack 40 is ensured even though a position dispersion of the cell stack 40 occurs during the process of disposing the cell stack 40 on the thermal press device 200 and the process of pressing the cell stack 40 by the thermal press device 200. In addition, the pressing method of FIG. 6 may exclude the protruding portion of the comparative example, which may simplify the configuration of the thermal press device 200.

With reference back to FIGS. 1 and 5, the pair of first fixing parts 61 and the second fixing part 62 may be attached to the cell stack 40 after the thermal press process. However, the present disclosure is not limited to that order. The pair of first fixing parts 61 may be positioned at the left and right edges of the cell stack 40 over the front, lateral, and rear surfaces of the cell stack 40. The second fixing part 62 may be positioned at the lower edge of the cell stack 40 over the front, lateral, and rear surfaces of the cell stack 40. The pair of first fixing parts 61 and the second fixing part 62 maintain a constant shape and thickness of the cell stack 40.

The pair of first fixing parts 61 each includes a portion that overlaps the correction sheet 50. That is, the pair of first fixing parts 61 may overlap the correction sheet 50 while covering the left and right edges of the correction sheet 50. Therefore, the correction sheet 50 may be attached to the cell stack 40 by its own adhesive layer and overlap the first fixing part 61, thereby more securely fixing the position.

With reference back to FIG. 1, the plurality of first tabs 13 may overlap one another and be integrally fixed by a method such as welding. The plurality of second tabs 23 may overlap one another and be integrally fixed by a method such as welding. A first lead tab 81 may be fixed to the plurality of first tabs 13, and a second lead tab 82 may be fixed to the plurality of second tabs 23.

The first lead tab 81 may be a terminal (e.g., a negative electrode terminal) of the first electrode 10, and the second lead tab 82 may be a terminal (e.g., a positive electrode terminal) of the second electrode 20. Junction portions between the plurality of first tabs 13 and the first lead tab 81 and junction portions between the plurality of second tabs 23 and the second lead tab 82 may be surrounded by a sealing tape 83, and the junction portions surrounded by the sealing tape 83 may overlap the sealing portion 133 of the casing 130.

According to the rechargeable battery 100 of FIG. 1, the correction sheet 50 may uniformize the thickness of the electrode assembly 120 and increase the joining forces between the first electrode 10, the separator 30, and the second electrode 20 in the entire electrode assembly 120. Therefore, the increased joining forces between the electrodes 10 and 20 and the separator 30 of the rechargeable battery 100 may improve the output characteristics and output stability.

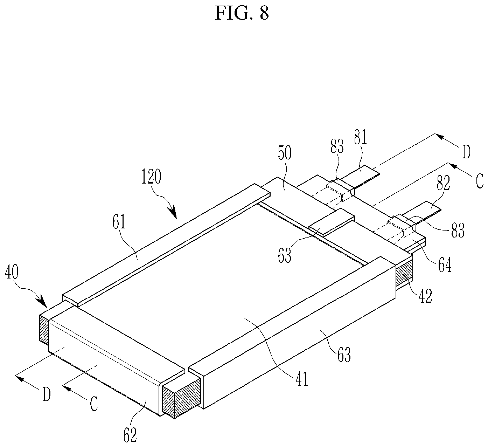

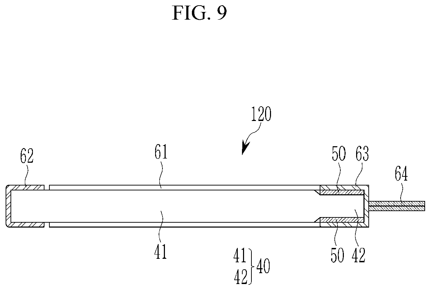

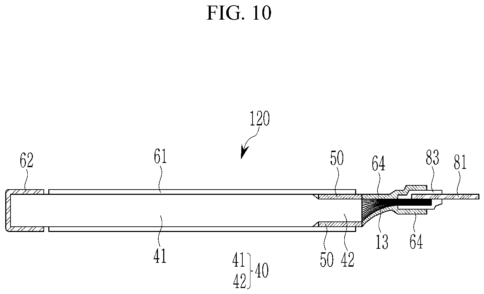

FIG. 8 is a perspective view of an electrode assembly of a rechargeable battery according to one or more embodiments. FIG. 9 is a cross-sectional view of the electrode assembly taken along line C-C in FIG. 8 according to one or more embodiments, and FIG. 10 is a cross-sectional view of the electrode assembly taken along line D-D in FIG. 8 according to one or more embodiments. The rechargeable battery of FIG. 8 may be identical or similar in configuration to that in FIG. 1, except for third and fourth fixing parts to be described below.

With reference to FIGS. 8 to 10, the electrode assembly 120 may include a third fixing part 63. The third fixing part 63 may be attached to the upper edge of the cell stack 40 and may have a portion that overlaps the correction sheet 50. The third fixing part 63 may be provided between the plurality of first tabs 13 and the plurality of second tabs 23 and positioned at a predetermined distance from the plurality of first tabs 13 and the plurality of second tabs 23.

The third fixing part 63 may be positioned over the outer surface of the correction sheet 50 fixed to the front surface of the cell stack 40, the lateral surface of the cell stack 40, and the outer surface of the correction sheet 50 attached to the rear surface of the cell stack 40. The third fixing part 63 may be configured as a polymer film having an adhesive layer and including a polymer film made of the same material as the correction sheet 50. The third fixing part 63 serves to maintain a constant shape and thickness of the cell stack 40 at the upper side of the cell stack 40.

The electrode assembly 120 may further include a fourth fixing part 64. The fourth fixing part 64 simultaneously surrounds the plurality of first tabs 13 and the plurality of second tabs 23 and has a portion that overlaps the correction sheet 50 and the third fixing part 63. The fourth fixing part 64 may overlap a part of the upper side of the correction sheet 50 and a part of the upper side of the third fixing part 63. A horizontal width of the fourth fixing part 64 may be set to be smaller than a distance between the pair of first fixing parts 61.

The fourth fixing part 64 may be configured as a polymer film having an adhesive layer and may include the same polymer film as the correction sheet 50 and the third fixing part 63. The fourth fixing part 64 may more assuredly fix the positions of the correction sheet 50 and the third fixing part 63 at the upper side of the cell stack 40. The fourth fixing part 64 may protect the plurality of first tabs 13 and the plurality of second tabs 23 at the time of thermally bonding the casing 130.

Table 1 below shows a result of measuring thicknesses of electrode assemblies according to four examples and electrode assemblies according to the comparative example. In the table below, a final thickness means a thickness of the electrode assembly after the electrode assembly and the casing are assembled and the formation process is completed.

**Table 1**

| | Measurem ent position | Example 1 | Example 2 | Example 3 | Example 4 | Comparati ve Example |
|---|---|---|---|---|---|---|
| | High (P1) | 4.29 | 4.26 | 4.28 | 4.26 | 4.19 |
| Thickness (mm) immediate ly after thermal press | Medium (P2) | 4.27 | 4.27 | 4.26 | 4.26 | 4.25 |
| | Low (P3) | 4.28 | 4.29 | 4.27 | 4.27 | 4.25 |
| | Standard deviation (delta) | 0.01 | 0.03 | 0.02 | 0.02 | 0.06 |
| Final thickness (mm) | High (P1) | 4.404 | 4.359 | 4.396 | 4.379 | 4.318 |
| | Medium (P2) | 4.417 | 4.398 | 4.422 | 4.413 | 4.410 |
| | Low (P3) | 4.417 | 4.403 | 4.444 | 4.425 | 4.426 |
| | Standard deviation (delta) | 0.043 | 0.044 | 0.048 | 0.046 | 0.108 |

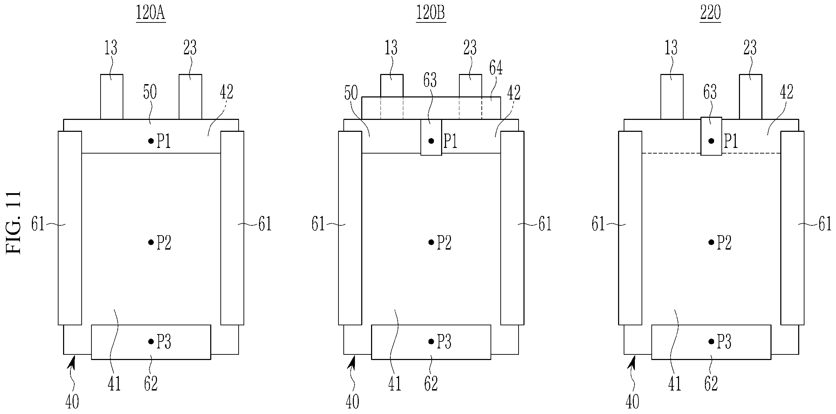

FIG. 11 is a schematic view illustrating the electrode assemblies according to Examples 1 to 4 in Table 1 above and the comparative example.

With reference to FIG. 11, the electrode assemblies 120A according to Examples 1 and 2 correspond to the electrode assembly illustrated in FIG. 1 and include the cell stack 40, the two correction sheets 50, the two first fixing parts 61, and the second fixing part 62. The two correction sheets 50 may be positioned on the front and rear surfaces of the second part 42. In the electrode assembly 120A according to Example 1, the two correction sheets 50 each have a thickness of 56 µm. In the electrode assembly 120A according to Example 2, the two correction sheets 50 each have a thickness of 30 µm.

The electrode assemblies 120B according to Examples 3 and 4 correspond to the electrode assembly illustrated in FIG. 8 and include the cell stack 40, the two correction sheets 50, the two first fixing parts 61 and the second to fourth fixing parts 62, 63 and 64. The two correction sheets 50 may be positioned on the front and rear surfaces of the second part 42. In the electrode assembly 120B according to Example 3, the two correction sheets 50 each have a thickness of 56 µm. In the electrode assembly 120B according to Example 4, the two correction sheets 50 each have a thickness of 30 µm.

An electrode assembly 220 according to the comparative example of FIG. 7 includes the cell stack 40, the two first fixing parts 61, the second fixing part 62, and the third fixing part 63.

The measurement positions High (P1)/Medium (P2)/Low (P3) for measuring the thicknesses of the electrode assemblies 120A, 120B, and 220 may be positioned side by side in the vertical direction in FIG. 11. The measurement position High (P1) may be one point on the second part 42, and the measurement position Low (P3) may be one point on the second fixing part 62 closer to the lower edge of the cell stack 40. The measurement position Medium (P2) may be positioned between P1 and P3 and may correspond to the first part 41.

According to the result shown in Table 1, it can be ascertained that the thickness difference between the positions P1-P3 is reduced and the thickness uniformity is improved in the electrode assemblies 120A and 120B according to Examples 1 to 4 having the correction sheet 50 in comparison with the electrode assembly 220 according to the comparative example. The improvement on the thickness uniformity of the electrode assemblies 120A and 120B leads to the improvement on the output characteristics and output stability of the rechargeable battery.

The present disclosure provides a rechargeable battery capable of uniformizing a thickness of an electrode assembly, increasing joining forces between a positive electrode, a separator, and a negative electrode in the entire electrode assembly, and improving output characteristics and output stability.

In the rechargeable battery according to one or more embodiments, the correction sheet may uniformize the thickness of the electrode assembly and increase the joining forces between the first electrode, the separator, and the second electrode in the entire electrode assembly. Therefore, output characteristics and output stability of the rechargeable battery may be improved by the increased joining forces between the electrodes and the separator.

While the embodiments of the present disclosure have been described above, the present disclosure is not limited thereto, and various modifications can be made and carried out within the scope of the claims, the detailed description and the accompanying drawings, and also fall within the scope of the present disclosure.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A rechargeable battery comprising:
an electrode assembly; and
a casing configured to accommodate and seal the electrode assembly, wherein the electrode assembly includes:
a cell stack including a plurality of first electrodes and a plurality of second electrodes alternately stacked one by one with a separator interposed therebetween, the cell stack including a first part having a first thickness, and a second part having a second thickness smaller than the first thickness;
a correction sheet positioned on the second part and configured to uniformize a thickness of the cell stack; and
a pair of first fixing parts positioned over a front surface, a lateral surface and a rear surface of the cell stack, the pair of first fixing parts having a portion that overlaps the correction sheet.

2. The rechargeable battery as claimed in claim 1, wherein the correction sheet includes a pair of correction sheets respectively positioned on a front surface and a rear surface of the second part.

3. The rechargeable battery as claimed in claim 2, wherein each of the pair of correction sheets is configured as a polymer film having an adhesive layer.

4. The rechargeable battery as claimed in any one of claims 1 to 3, wherein the cell stack has a uniform thickness by being pressed by a thermal press device after the correction sheet is attached to the second part.

5. The rechargeable battery as claimed in any one of claims 1 to 4, wherein:
the cell stack includes a first edge and second and third edges intersecting the first edge,
a plurality of first tabs extending from the plurality of first electrodes and a plurality of second tabs extending from the plurality of second electrodes at the first edge, and
the second part and the correction sheet are positioned to adjoin the first edge.

6. The rechargeable battery as claimed in claim 5, wherein the second part and the correction sheet each have a width equal to a width of the cell stack.

7. The rechargeable battery as claimed in claim 5 or claim 6, wherein the pair of first fixing parts is positioned over the front surface, the lateral surface and the rear surface of the cell stack at the second and third edges and overlaps the correction sheet on at least one of the front surface and the rear surface of the cell stack.

8. The rechargeable battery as claimed in any one of claims 5 to 7, wherein:
the cell stack includes a fourth edge parallel to the first edge and intersecting the second and third edges, and
the electrode assembly further includes a second fixing part positioned over the front surface, the lateral surface and the rear surface of the cell stack at the fourth edge.

9. The rechargeable battery as claimed in any one of claims 5 to 8, wherein:
the electrode assembly further includes a third fixing part positioned between the plurality of first tabs and the plurality of second tabs at the first edge, and
the third fixing part is positioned over the front surface, the lateral surface and the rear surface of the cell stack, the third fixing part including a portion that overlaps the correction sheet.

10. The rechargeable battery as claimed in any one of claims 5 to 9, wherein the electrode assembly further includes a fourth fixing part configured to surround the plurality of first tabs and the plurality of second tabs.

11. A rechargeable battery, comprising:
an electrode assembly; and
a casing configured to accommodate and seal the electrode assembly, wherein the electrode assembly includes:
a cell stack including a separator folded multiple times in a zigzag pattern, and a plurality of first electrodes and a plurality of second electrodes alternately stacked one by one with the separator interposed therebetween, the cell stack being divided into a first part and a second part having a smaller thickness than the first part;
a pair of correction sheets provided on the second part and positioned on a front surface and a rear surface of the cell stack to uniformize a thickness of the cell stack; and
a plurality of fixing parts attached to an edge of the cell stack over the front surface, a lateral surface and the rear surface of the cell stack, the plurality of fixing parts having a portion overlapping the pair of correction sheets while covering the pair of correction sheets from above.

12. The rechargeable battery as claimed in claim 11, wherein:
the cell stack includes a first edge, and second and third edges intersecting the first edge,
a plurality of first tabs extends from the plurality of first electrodes and a plurality of second tabs extends from the plurality of second electrodes at the first edge, and
the second part and the pair of correction sheets are positioned to adjoin the first edge.

13. The rechargeable battery as claimed in claim 12, wherein:
the plurality of fixing parts includes a pair of first fixing parts, and
the pair of first fixing parts is attached to the pair of correction sheets and the cell stack at the second and third edges.

14. The rechargeable battery as claimed in claim 13, wherein:
the plurality of fixing parts further includes a third fixing part, and
the third fixing part is provided between the plurality of first tabs and the plurality of second tabs at the first edge and attached to the pair of correction sheets and the cell stack.
